# EUROPEAN PATENT APPLICATION

(11) **EP 3 576 281 A1**
(43) Date of publication of application: **04.12.2019**
(21) Application number: 18744972.3
(22) Date of filing: 26.01.2018
(51) Int. Cl.: H02M 7/48, H02M 3/28

(54) **METHOD FOR CONTROLLING INVERTER DURING STARTUP AND CONTROL DEVICE**

(30) Priority: 30.01.2017 JP 2017014293
(71) Applicant: Furukawa Electric Co., Ltd., Chiyoda-ku Tokyo 100-8322 (JP); Furukawa Automotive Systems Inc., Inukami-gun, Shiga 522-0242 (JP)
(72) Inventor: OKUDERA, Akihiro, Tokyo 100-8322 (JP); SUGIMURA, Takezo, Tokyo 100-8322 (JP); TAMURA, Ryosuke, Tokyo 100-8322 (JP)
(74) Representative: Weickmann & Weickmann PartmbB
(86) International application number: PCT/JP2018/002385
(87) International publication number: WO 2018/139565

(57) **Abstract**

Provided are a control method and a control device for an inverter being capable of soft start using soft switching without causing a voltage surge or a current surge. A control method for soft start using soft switching of an inverter (2), the inverter (2) being a bridge circuit with at least two upper and lower arms, the control method including: shifting phases of gate pulses (G1, G4) for a switching element (Q1) of the upper arm and a switching element (Q4) of the lower arm, which are paired for current energization, from each other to form an overlap period of both the gate pulses; and changing magnitude of the shift to gradually increase the overlap period that defines an energization period to implement the soft start using the soft switching.

## Description

### Technical Field

The present invention relates to a method for controlling an inverter during startup and a control device.

### Background Art

As a method of startup of an inverter, a method of startup based on soft start (soft startup) is known to avoid a large inrush current or overvoltage charging to a power source capacitor embedded in a load connected to an inverter output. Moreover, control of an inverter by soft switching is also known as a way to prevent the inverter from generating electromagnetic noise, or to reduce switching loss of a semiconductor switching element constituting the inverter. Thus, a method of startup of an inverter on the basis of soft start using soft switching is also publicly known as disclosed in Patent Literature 1 and Patent Literature 2, and the like.

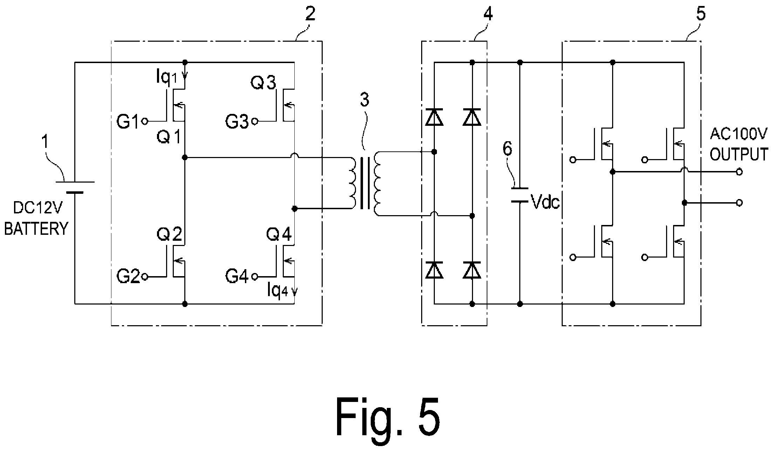

Unfortunately, the method of startup of an inverter on the basis of soft start using a conventional soft switching, has a problem as described below. Fig. 5 illustrates a simplified circuit diagram of a DC/AC converter for converting DC 12V to AC 100V mounted on a vehicle, for example. Schematic operation of this converter is as follows: DC voltage of a battery power supply 1 of DC 12V is once converted into AC by an inverter main circuit 2; the voltage is boosted in the AC state using a transformer 3; a rectifier 4 converts the boosted AC voltage to DC voltage; and a capacitor 6 is charged. Then, DC voltage Vdc charged to the capacitor 6 is converted to AC by the inverter main circuit 5, and AC 100V is output. The reason why DC that is once converted into AC, is returned to DC again, is that DC 12V is too low as DC voltage to output AC 100V, making it is necessary to form DC voltage high enough to output AC 100V. The reason why DC, which is once converted into AC is returned to DC again instead of direct conversion from low-voltage DC to high-voltage DC, is that operation of boosting voltage can be implemented easier with AC using a transformer than with DC, and a device downsizing can be also realized. In the soft start that uses the conventional soft switching of the DC/AC converter configured as described above, first, the inverter main circuit 2 starts on the basis of the soft start operation and the capacitor 6 is charged to a predetermined target voltage. Next, when voltage of the capacitor 6 reaches the target voltage, the inverter main circuit 5, while performing the soft start, gradually increases voltage of AC voltage and outputs the same. Unfortunately, this conventional method has the following problems.

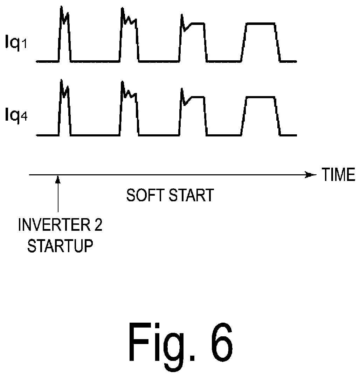

Fig. 6 illustrates waveforms of respective element currents Iq1 and Iq4 of the inverter main circuit 2 in a case where a method of startup of an inverter using the conventional soft switching is employed. As is clear from Fig. 6, at the beginning of the soft start, i.e., in a region having a narrow pulse width, the soft switching does not function correctly, and current surges or voltage surges occur. When such current surges or voltage surges occur, adverse effects, such as malfunction or the like, occur on the inverter itself or an electrical device in the vicinity of the inverter. In addition, in switching where a current surge or voltage surge occurs, a loss of a switching element of the inverter also increases, and the efficiency of the inverter decreases. Moreover, a need to enhance cooling of the switching elements to prevent the occurrence of thermal breaking in the switching element due to heat generated by the increased loss arises.

In addition, when the method of startup of an inverter on the basis of soft start using conventional soft switching is used, DC voltage Vdc of the capacitor 6, which is DC link voltage, tends to become overvoltage with respect to target voltage Vdcref. In such a case, as in Patent Literature 3, by causing switching elements of upper and lower arms of the inverter to be simultaneously conducted, i.e., by forming a short circuit path by the upper and lower arms to forcibly discharge the capacitor 6, it is possible to modify the overvoltage to the target voltage. However, the short circuit operation of the upper and lower arms is not a preferred control because this operation causes a large damage on the switching elements.

### Citation List

### Patent Literature

Patent Literature 1: JP 2010-236711 A
Patent Literature 2: JP 2012-029436 A
Patent Literature 3: JP 5696589

### Summary of Invention

### Technical Problem

An object of the present invention is to provide a method for controlling an inverter and a control device on the basis of soft start that uses soft switching, and the soft start causing no voltage surge or current surge.

### Solution to Problem

The problem described above is solved by a control method for soft start using soft switching of an inverter, the inverter being a bridge circuit with at least two upper and lower arms, the control method including: shifting phases of gate pulses for a switching element of the upper arm and a switching element of the lower arm, which are paired for current energization, from each other to form an overlap period of both the gate pulses; and changing magnitude of the shift to gradually increase the overlap period that defines an energization period thereby implementing the soft start using the soft switching.

### Advantageous Effects of Invention

Using the present invention enables implementing an inverter capable of a soft start using soft switching without causing a voltage surge or a current surge.

### Brief Description of Drawings

Fig. 1 is a diagram of an inverter main circuit for illustrating the present invention.
Fig. 2 is an inverter control block diagram for illustrating the present invention.
Fig. 3 illustrates a comparison between gate pulses based on a control method using the present invention and those based on a control method using a conventional method.
Fig. 4 illustrates a comparison between DC link voltage based on the control method using the present invention and that based on a control method using a conventional method.
Fig. 5 is a diagram of a DC/AC converter mounted on a vehicle.
Fig. 6 is a diagram of inverter element current in a case where conventional gate pulses are used.

### Description of Embodiments

### Examples

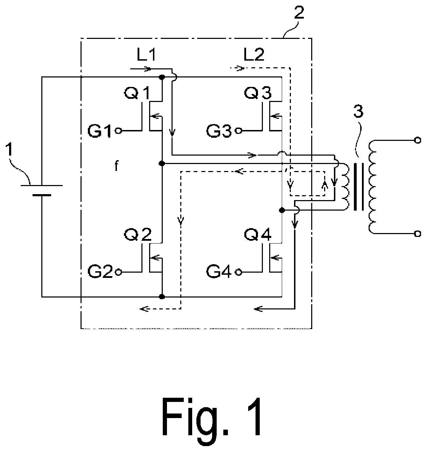

The present invention is made by devising a phase relationship between gate pulses of respective switching elements constituting an inverter, and widths of the respective gate pulses. Fig. 1 illustrates a portion of an inverter main circuit 2, which is extracted from Fig. 5, and the inverter is configured as a single-phase H-type inverter using an FET, for example. Operation of the inverter main circuit 2 includes: turning on (conductive) switching elements Q1 and Q4 under a state where switching elements Q2 and Q3 are turned off (non-conductive) to charge a capacitor 6 of Fig. 5; forming a current loop L1 of the switching element Q1, a load (capacitor 6), and the switching element Q4 to cause a positive half-wave current to flow; and, next, turning off the switching elements Q1 and Q4 but turning on the switching elements Q3 and Q2 instead; forming a current loop L2 of the switching element Q3, the load (capacitor 6), and the switching elements Q2 to cause a negative half-wave current to flow; thereby causing the inverter main circuit 2 to output AC. That is, the switching element Q1 of the upper arm and the switching element Q4 of the lower arm are in a paired relationship for energization. Likewise, the switching element Q2 and the switching element Q3 are in a paired relationship. Here, the capacitor 6 needs to be gradually charged on the basis of the soft start to avoid charging the capacitor 6 with a large inrush current.

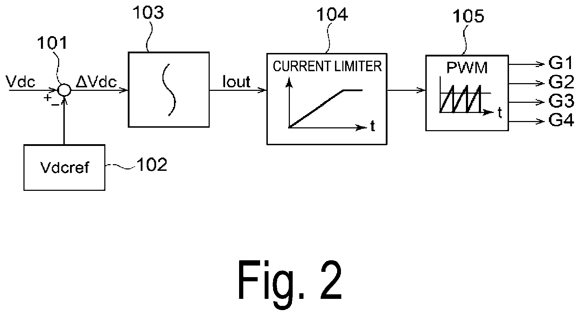

Fig. 2 is a control block diagram illustrating an example of control of the inverter main circuit 2. This control block diagram shows the inverter main circuit 2 that controls the capacitor 6 so as to maintain the DC voltage Vdc thereof at the target voltage Vdcref. However, the inverter main circuit 2 implements the control during startup so as to prevent inrush current from occurring, by gradually charging the capacitor 6 on the basis of the soft start, such that no inrush current flows into the capacitor 6. Operation during startup will be described below with reference to the control block diagram of Fig. 2. First, the DC voltage Vdc of the capacitor is measured by a voltage detector, and a difference voltage ΔVdc between the measured DC voltage Vdc and the target DC voltage Vdcref (102) is calculated by a subtractor 101. To cause the difference voltage ΔVdc to be zero, an integrator 103 calculates an output command value lout of the inverter main circuit 2. This command value lout is transmitted to a PWM generator 105 via a current limiter 104, and the PWM generator 105 outputs gate pulses G1, G2, G3, and G4 of the corresponding switching elements Q1, Q2, Q3, and Q4 to enable the inverter main circuit 2 to output the command value lout.

The current limiter 104 has a limiter value maintained constant during steady time, but during startup, the current limiter 104 gradually increases the limiter value to gradually increase charging current of the capacitor 6, thereby implementing soft start without causing inrush current. The PWM generator 105 generates the gate pulses G1, G2, G3, and G4, which implement soft start, in accordance with a command value having passed through the current limiter 104. However, as described above, gate pulses formed by the conventional PWM generator 105 cause a problem in that a voltage surge or a current surge occurs to increase DC voltage of the capacitor 6 to overvoltage, which is greater than the target voltage, with no soft switching being implemented at the soft startup.

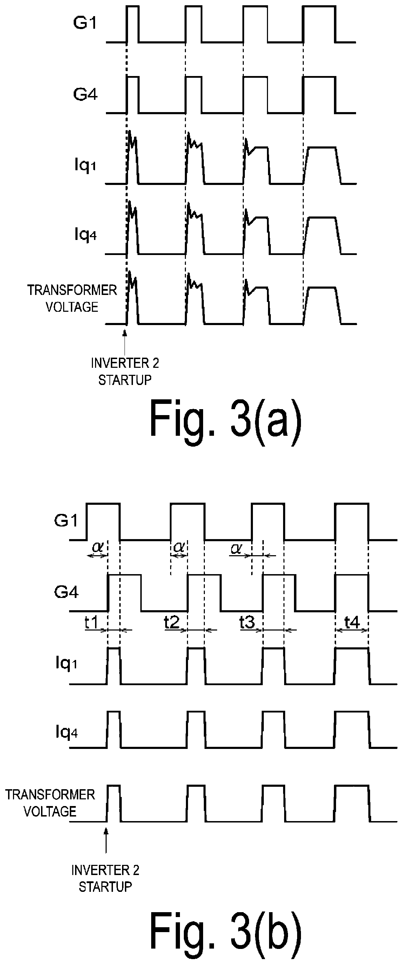

Fig. 3(a) illustrates the gate pulse G1 to the switching element Q1, and the gate pulse G4 to the switching element Q4 in the case of a soft start method using a conventional soft switching. First, the gate pulses G1 and G4 are synchronized with no phase shift, and each of these has a pulse width that gradually increases to implement the soft start, i.e., to implement gradual increase in supply current. However, this conventional gate pulse method causes a surge current to occur in each of the currents Iq1 and Iq4 of the corresponding switching elements Q1 and Q4 at an initial stage having a relatively short pulse width, hence soft switching cannot be implemented. The occurrence of a surge current bring about electromagnetic noise that not only causes electromagnetic interference to surrounding electrical devices, including the switching elements themselves, but also increases switching losses of the switching elements Q1, Q2, Q3, and Q4, thereby causing a trouble, such as a decrease in device efficiency or breakage of the switching elements due to insufficient cooling of the switching elements.

Meanwhile, Fig. 3(b) illustrates the gate pulse method of the present invention. In the present invention, phases of respective gate pulses are displaced from each other by α degree, for example, to form an overlap of each of the gate pulses. For example, referring to the gate pulses G1 and G4 to the corresponding switching elements Q1 and Q4, both the switching elements Q1 and Q4 are turned on only in periods (t1, t2, t3, and t4), during which the gate pulses G1 and G4 overlap with each other and current is charged to the capacitor 6. Unlike gate pulses of the conventional method, the gate pulses of the present invention each have a wide width from the beginning, i.e., a rectangular wave having a predetermined width with which a surge current is unlikely to occur. For example, the pulse widths of all of the gate pulses G1 and G4 in a soft start period are set equal to each other. In addition, in order to implement the soft start, the charging currents Iq1 and Iq4 to the capacitor 6 need to be gradually increased, thus, by gradually reducing the size of the phase α to gradually increase an overlap period (t1 < t2 < t3 < t4) during which current flows to the switching elements, the charging currents Iq1 and Iq4 gradually increase in width, as a result. When such gate pulses are employed, a surge current is unlikely to occur in the currents Iq1 and Iq4 of the corresponding switching elements Q1 and Q4 even at the initial stage of the soft start. In other words, in the present invention, a surge current and a surge voltage are suppressed even when the inverter is started on the basis of the soft start using soft switching, hence the inverter itself or an electrical device in the vicinity of the inverter is less likely to be negatively affected by electrical noise. Moreover, switching losses of the switching elements of the inverter are also suppressed.

While an aspect of gradually increasing an overlap period by shifting phases of gate pulses with the same width is described above, the present invention is not limited thereto, and the overlap period may be gradually increased by changing (increasing) one of gate pulse widths.

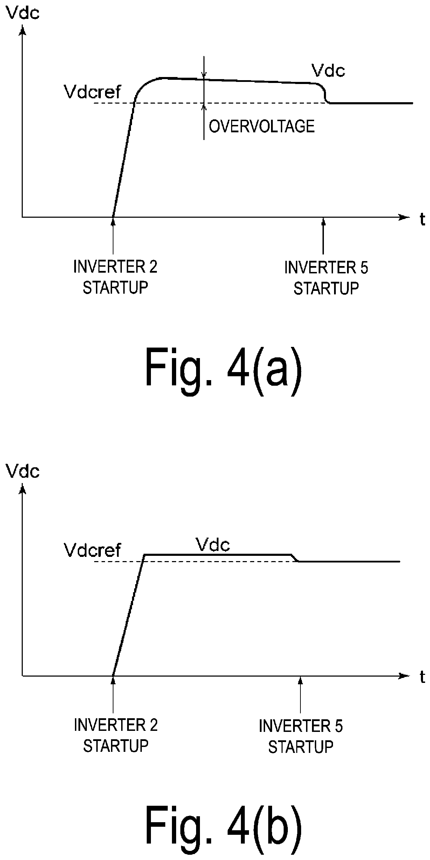

Fig. 4(a) illustrates a time course of the voltage Vdc of the capacitor 6 with the soft start method using soft switching in the conventional gate pulse method. The capacitor voltage Vdc is initially in an overvoltage state that greatly exceeds the target voltage Vdcref. In contrast, Fig. 4(b) illustrates a time course of the voltage Vdc of the capacitor 6 on the basis of the soft start method using soft switching in the gate pulse method of the present invention. The capacitor voltage Vdc is maintained at the target voltage Vdcref and is not overvoltage. When the present invention is employed, effects of suppressing a surge current and a surge voltage, as well as preventing overvoltage of DC link voltage can be achieved.

The method of controlling an inverter during startup and the control device can also be applied to not only the inverter main circuit 2 but also the inverter main circuit 5. Thus, when power is supplied to a load of the inverter main circuit 5 by starting the inverter main circuit 5 on the basis of the soft start after the inverter main circuit 2 is started on the basis of the soft start and the capacitor 6 reaches a rated voltage or a target voltage, or after a predetermined time has elapsed, it is possible to implement a soft start without causing a surge voltage or a surge current not only in the inverter main circuit 2 but also in the inverter main circuit 5.

While the method for controlling an inverter during startup of the present invention is basically applicable regardless of a type of switching element, a switching element particularly suited for this new control method is a GaN element (GaN-based FET), for example. The GaN element has a shorter turn-off time or turn-on time than an Si element, i.e., has a property of shutting off current abruptly or passing current with steep rise. Thus, in the conventional control method, the GaN element has an advantage of smaller switching loss than the Si element, but has a disadvantage of an increase in a surge voltage during turn-on or turn-off, which is commonly known in this technical field.

However, in the method of controlling an inverter during startup of the present invention, it is possible to achieve a superior effect of enabling reducing switching loss without increasing a surge voltage during turn-on or turn-off of a switching element even when the GaN element is used, and this effect is different from effects commonly known in the prior art. When there is used a switching element, such as an Si element having a long turn-off time or turn-on time, i.e., an element having a property of gradually shutting off current or passing current with gradual rise, an edge of a rectangular wave of an overlapping portion defining an energization period in the present invention becomes smooth to form a waveform with a distorted pulse waveform. In particular, when the overlap period is short, the smooth edge portion accounts for a relatively large proportion, and the distorted portion of the waveform is relatively increased. This makes a defect of a pulse waveform with a collapsed overlap period prominent. However, when the GaN element having a short turn-off time or turn-on time is used for a switching element, a rectangular wave with a sharp edge can be obtained, and thus even in a short overlap period, accurate quantitative control can be achieved.

In the description of the above examples, while a single phase inverter is described as an example, the present invention can be also applied to a three-phase inverter. Needless to say, the present invention is not limited to the examples described as long as it does not exceed the scope of the claims.

### Reference Signs List

- 1...: Battery power source
- 2...: Inverter main circuit
- 3...: Transformer
- 4...: Rectifier
- 5...: Inverter main circuit
- 6...: Capacitor
- 101...: Subtractor
- 102...: Target DC voltage (Vdcref)
- 103...: Integrator
- 104...: Current limiter
- 105...: PWM generator
- Q1, Q2, Q3, Q4...: Switching element
- G1, G2, G3, G4...: Gate pulse
- α...: Phase shift (degree)
- t1, t2, t3, t4...: Overlap period
- Iq1, Iq2, Iq3, Iq4...: Switching element current
- Vdc...: Capacitor DC voltage
- Iout...: Output command value

## Claims

1. A method for controlling an inverter for soft start using soft switching, the inverter being a bridge circuit with at least two upper and lower arms, the control method comprising:
shifting phases of gate pulses for a switching element of the upper arm and a switching element of the lower arm, which are paired for current energization, from each other to form an overlap period of both the gate pulses; and
changing magnitude of the shift to increase the overlap period that defines an energization period over time thereby implementing the soft start using the soft switching.

2. The control method according to claim 1, wherein the pulses each have a same pulse width.

3. The control method according to claim 1 or 2, wherein each of the switching elements is a GaN-based element.

4. A method for controlling a DC/AC converter, the DC/AC converter including at least two inverters, the control method comprising:
converting DC power supply of a battery to AC voltage by a first inverter;
boosting by a transformer the AC voltage converted;
rectifying the AC voltage boosted in order to form DC voltage;
converting by a second inverter the DC voltage rectified to AC voltage; and
outputting the AC voltage, wherein
the first inverter is started on the basis of soft start using the control method for soft start using soft switching of an inverter according to any one of claims 1 to 3, and
the second inverter is started on the basis of soft start after a predetermined time has elapsed.

5. A control device for soft start using soft switching of an inverter, the control device comprising the AC converter that is a bridge circuit having at least two upper and lower arms, wherein
phases of gate pulses for a switching element of the upper arm and a switching element of the lower arm, which are paired for current energization, are shifted from each other to form an overlap period of both the gate pulses, and then the overlap period is increased over time thereby implementing the soft start using the soft switching.

6. The control device according to claim 5, wherein the gate pulses each have a same pulse width.

7. The control device according to claim 5 or 6, wherein each of the switching elements is a GaN-based element.

8. A control device for a DC/AC converter, the DC/AC converter including at least two inverters, which are a first inverter converting DC power supply of a battery to AC voltage, the AC voltage converted being boosted by a transformer, the AC voltage boosted being rectified to form DC voltage, and a second inverter converting the DC voltage rectified to AC voltage and outputting the AC voltage,
the control device comprising a control device for soft start using soft switching of the inverter according to any one of claims 5 to 7, wherein
the first inverter is started on the basis of soft start using the control device, and
the second inverter is started on the basis of soft start after a predetermined time has elapsed.
